# EUROPÄISCHE PATENTSCHRIFT

(11) **EP 3 118 708 B1**
(45) Veröffentlichungstag und Bekanntmachung des Hinweises auf die Patenterteilung: **21.03.2018**
(21) Anmeldenummer: 16177595.2
(22) Anmeldetag: 01.07.2016
(51) Int. Cl.: G05D 1/02

(54) **STEUERVERFAHREN FÜR EIN KOMMISSIONIERFLURFÖRDERZEUG**
CONTROL METHOD FOR A PICKING TRUCK
PROCEDE DE COMMANDE D'UN CHARIOT DE COMMISSIONNEMENT

(30) Priorität: 17.07.2015 DE 102015111699
(43) Veröffentlichungstag der Anmeldung: 18.01.2017
(73) Patentinhaber: STILL GmbH, 22113 Hamburg (DE)
(72) Erfinder: Viereck, Volker, 23898 Kühsen (DE); Krüger-Basjmeleh, Tino, 25469 Halstenbek (DE); Wittmann, Thomas, 21035 Hamburg (DE); Fischer, Christian, 24598 Boostedt (DE)
(74) Vertreter: Patentship Patentanwaltsgesellschaft mbH

(56) Entgegenhaltungen:
- EP-A1- 0 032 393
- EP-A1- 0 221 423
- EP-A2- 0 391 206
- EP-A2- 2 036 763
- WO-A1-2015/097736
- DE-A1- 2 621 939
- DE-A1-102013 110 456
- JP-A- H0 624 510

## Beschreibung

Die Erfindung betrifft ein Steuerverfahren für ein Kommissionierflurförderzeug. Insbesondere betrifft die Erfindung ein Verfahren zur Steuerung eines Flurförderzeugs, vor allem eines Flurförderzeugs zur Kommissionierung, wobei das Flurförderzeug zur Überwachung der Umgebung einen Sensor aufweist, der mit einer Steuerungsvorrichtung verbunden ist, und die Steuerungsvorrichtung nach einem Startbefehl das Flurförderzeug automatisch ohne Signal eines durch eine Person betätigten Fahrsignalgebers fährt, durch Auswertung der Daten des Sensors einen Überwachungsbereich erfasst, in den Daten mindestens eine Führungslinie aus in Linie angeordneten Landmarken und/oder Markierungen bestimmt und das Flurförderzeug in einem Seitenabstand zu der Führungslinie an dieser entlang fährt.

Beim Kommissionieren in Lagerhäusern werden spezielle Flurförderzeuge eingesetzt, mit denen durch den Lagerbereich, beispielsweise durch Regalreihen gefahren wird, um die für eine Auslieferung bestimmten Waren zusammen zu stellen. Solche Kommissionierflurförderzeuge können dabei so ausgelegt sein, dass eine Person während des Kommissionierens mitfährt, aber auch beim Zusammenstellen der Waren und beim Fahren an einem Regal entlang zu Fuß neben dem Fahrzeug mitläuft, um Waren aus dem Regal zu entnehmen und diese auf eine Palette oder in einen Transportbehälter auf dem Flurförderzeug abzulegen.

Für die erleichterte Bedienung des Kommissionierflurförderzeugs sind dabei Fernbedienungen bekannt. Durch solche Fernbedienungen hat die kommissionierende Person, der Kommissionierer, die Möglichkeit, das Kommissionierflurförderzeug zu verlassen und dessen Fahrbewegungen mit der Fernbedienung anzusteuern. Eine bekannte Variante hierfür ist, dass der Kommissionierer durch einen Knopfdruck ein Vorwärtsfahren des Fahrzeugs anfordert, wobei das Kommissionierflurförderzeugs so lange fährt, wie der Knopf gedrückt bleibt.

Nachteilig an diesem Stand der Technik ist, dass keine Überwachung auf Hindernisse erfolgt und auch nicht gewährleistet ist, dass das Kommissionierflurförderzeug beispielsweise in einem Regalgang seine Spur einhält und genau in der Richtung des Ganges fährt. Hierzu müsste die bedienende Person bzw. der Kommissionierer das Kommissionierflurförderzeug zeitaufwendig genau ausrichten.

Es ist daher bekannt, eine Steuerung vorzusehen die das Kommissionierflurförderzeug automatisch in einem Regalgang führt, indem es sich an der Umgebung orientiert. Hierfür werden beispielsweise Laserscanner eingesetzt, mit denen die Kontur der Seite des Ganges erkannt wird, während das Kommissionierflurförderzeugs fährt und dass somit das Regal selbst als Führungslinie benutzt.

Dabei ergibt sich jedoch das Problem, dass die für das Kommissionieren eingesetzten Flurförderzeuge mit einem fest vorgegebenen Abstand zu einer Kontur einer Gangseite arbeiten. Gewünschte Anpassungen dieses Abstands können nur aufwendig, beispielsweise durch eine Veränderung der Parameter in der Steuerung, erreicht werden. Der Bediener selbst bzw. der Kommissionierer kann den Abstand des Flurförderzeugs zum Regal nicht verändern und daher auch nicht abhängig von der Situation oder eigenen Wünschen anpassen.

Der vorliegenden Erfindung liegt die Aufgabe zugrunde, ein Verfahren zur Steuerung eines Kommissionierflurförderzeugs zur Verfügung zu stellen, das die zuvor genannten Nachteile vermeidet und mit dem eine automatische Fahrt während des Kommissionierens bei zugleich leichterer Bedienung und größerer Anpassungsfähigkeit an Wünsche der kommissionierenden Person durchgeführt werden kann.

Diese Aufgabe wird durch ein Verfahren mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Verfahren zur Steuerung eines Flurförderzeugs, insbesondere eines Flurförderzeugs zur Kommissionierung, wobei das Flurförderzeug zur Überwachung der Umgebung einen Sensor aufweist, der mit einer Steuerungsvorrichtung verbunden ist, und die Steuerungsvorrichtung nach einem Startbefehl das Flurförderzeug automatisch ohne Signal eines durch eine Person betätigten Fahrsignalgebers fährt, durch Auswertung der Daten des Sensors einen Überwachungsbereich erfasst, in den Daten mindestens eine Führungslinie aus in Linie angeordneten Landmarken und/oder Markierungen bestimmt und das Flurförderzeug in einem Seitenabstand zu der Führungslinie an dieser entlang fährt, der bestehende Abstand des Flurförderzeugs zur Führungslinie von der Steuerungsvorrichtung durch eine Befehlseingabe als Sollwert für den Seitenabstand gewählt wird.

Der Kommissionierer bzw. die bedienende Person ist völlig frei, den gewünschten Seitenabstand schnell sowie effektiv einzustellen. Vorteilhaft ergibt sich eine optimale Ergonomie im Arbeitsprozess da zusätzliche Bedienschritte nicht erforderlich sind und dies zugleich mit dem Start des automatischen Fahrbetriebs erfolgen kann, wenn die Befehlseingabe gleichzeitig durch den Startbefehl erfolgt. Es ist auch jederzeit möglich, den Sollwert für den Seitenabstand neu zu definieren, beispielsweise durch eine Änderung des Seitenabstands im manuellen Betrieb und eine erneute Befehlseingabe.

In einer Weiterbildung des Verfahrens erfolgt die Befehlseingabe zugleich durch den Startbefehl.

Wenn nicht automatisch bei jedem Startbefehl für eine automatische Fahrbewegung der Sollwert für den Seitenabstand neu eingestellt wird, sondern hier eine Wahlmöglichkeit besteht, so kann beispielsweise ein eingestellter Sollwert für den Seitenabstand beim Wechsel der Kommissionierseite, beispielsweise von der rechten Regalseite auf die linke oder umgekehrt in einer Regalgasse, beibehalten werden, wenn das Flurförderzeug zur jeweils anderen Seite bewegt wird. Umgekehrt ist es jedoch besonders vorteilhaft und erspart zusätzliche Bedienschritte, wenn die Einstellung des Sollwerts zugleich mit dem Startbefehl für den automatischen Fahrbetrieb beim Kommissionieren erfolgt.

Die in Linie angeordneten Landmarken können Waren und/oder Teile eines Regals sind und die Führungslinie kann aus einer Regalkante bestehen.

Das beschriebene Verfahren ist besonders vorteilhaft in Regalgassen beim Kommissionieren einzusetzen. Die Struktur eines Regals, insbesondere die Regalkante kann mit einer optischen Bilderfassung und Methoden der Bildverarbeitung gut erkannt werden. In einer Regalgasse ist es aber besonders vorteilhaft, wenn ein Kommissionierer den Seitenabstand nach seinen Vorlieben und Bedürfnissen auf einfache Art und Weise sowie sehr schnell einstellen kann.

Vorteilhaft bestehen die Markierungen aus Reflexionselementen.

In Arbeitsbereichen von Flurförderzeugen werden häufig Markierungen eingesetzt, die mit optischen Sensoren, insbesondere Lasersensoren gut abgetastet werden können, wie etwa Reflexionselementen. Diese kommen zum Einsatz, um eine Navigation in einem Lagerbereich zu ermöglichen. Es ist auch möglich, solche Markierungen für eine geführte Fahrbewegung einzusetzen, beispielsweise wenn die Vorderseite eines Regals eine Mehrzahl solcher Reflexionselemente aufweist.

Der Sollabstand kann durch eine Eingabevorrichtung geändert werden, insbesondere schrittweise um einen vorgegebenen Parameterwert.

Dies ermöglicht der bedienenden Person bzw. dem Kommissionierer jederzeit eine Anpassung. Durch eine schrittweise Eingabe ist beispielsweise eine Änderung des Seitenabstands durch einen Tastendruck bzw. mehrfachen Tastendruck möglich und somit eine schnelle sowie einfache Eingabe.

Die Eingabevorrichtung kann eine Fernbedienung sein.

Der Sensor kann ein optischer Sensor sein, insbesondere ein Laserscanner, eine 3D-Kamera, eine Stereokamera oder eine Monokular-Kamera.

Die Auswertung der Daten des Sensors und insbesondere die Erfassung der Umgebung durch die Steuerungsvorrichtung erfolgt mithilfe der im Stand der Technik bekannten Methoden und Algorithmen der digitalen Bildverarbeitung. Dabei kann eine Auswertung höherwertiger Merkmale, wie beispielsweise Linien, Ecken usw. erfolgen und nicht allein einzelner Punkte, um die Erkennung beispielsweise einer Regalkante als Führungslinie bzw. eines Regals zu verbessern. Es ist auch möglich, sich an speziell markierten Freiflächen zur Navigation zu orientieren.

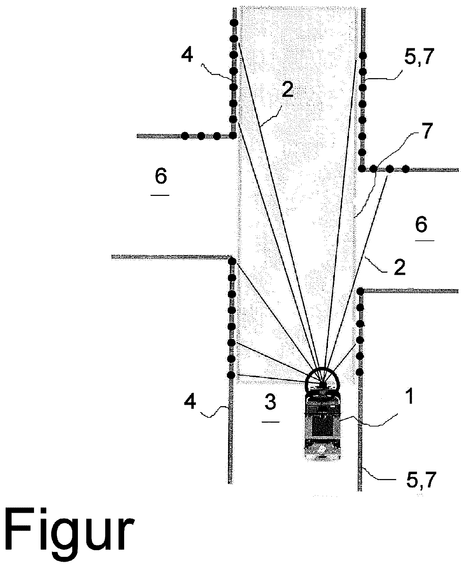

Weitere Vorteile und Einzelheiten der Erfindung werden anhand des in der schematischen Figur dargestellten Ausführungsbeispiels näher erläutert. Hierbei zeigt die Figur ein Flurförderzeug 1 mit einem Sensor, der durch Laserstrahlen 2 die Geometrie einer Regalgasse 3 mit einer linken Regalkante 4 sowie einer rechten Regalkante 5 abtastet. Die Regalgasse 3 weist zwei einmündende Quergänge 6 auf.

Wenn der Kommissionierende am Beginn der Regalgasse 3, hier auf der rechten Seite, in den gewünschten Seitenabstand fährt und durch einen Startbefehl den automatischen Fahrbetrieb beginnt, so wird zugleich durch den Startbefehl ein Sollwert für den Seitenabstand von der Steuerungsvorrichtung abgespeichert, mit dem das Flurförderzeug 1 in dem vorliegenden Beispiel an der rechten Regalkante 4 als einer Führungslinie 7 entlang bewegt wird.

## Patentansprüche

1. Verfahren zur Steuerung eines Flurförderzeugs (1), insbesondere eines Flurförderzeugs (1) zur Kommissionierung, wobei das Flurförderzeug (1) zur Überwachung der Umgebung einen Sensor aufweist, der mit einer Steuerungsvorrichtung verbunden ist, und die Steuerungsvorrichtung nach einem Startbefehl das Flurförderzeug (1) automatisch ohne Signal eines durch eine Person betätigten Fahrsignalgebers fährt, durch Auswertung der Daten des Sensors einen Überwachungsbereich erfasst, in den Daten mindestens eine Führungslinie (7) aus in Linie angeordneten Landmarken und/oder Markierungen bestimmt und das Flurförderzeug (1) in einem Seitenabstand zu der Führungslinie (7) an dieser entlang fährt,
**dadurch gekennzeichnet,**
**dass** der bestehende Abstand des Flurförderzeugs (1) zur Führungslinie (7) von der Steuerungsvorrichtung durch eine Befehlseingabe als Sollwert für den Seitenabstand gewählt wird.

2. Verfahren nach Anspruch 1,
**dadurch gekennzeichnet,**
**dass** die Befehlseingabe zugleich durch den Startbefehl erfolgt.

3. Verfahren nach Anspruch 1 oder 2,
**dadurch gekennzeichnet,**
**dass** die in Linie angeordneten Landmarken Waren und/oder Teile eines Regals sind und die Führungslinie (7) aus einer Regalkante (5) besteht.

4. Verfahren nach Anspruch 1 oder 2,
**dadurch gekennzeichnet,**
**dass** die Markierungen aus Reflexionselementen bestehen.

5. Verfahren nach einem der Ansprüche 1 bis 4,
**dadurch gekennzeichnet,**
**dass** der Sollabstand durch eine Eingabevorrichtung geändert werden kann, insbesondere schrittweise um einen vorgegebenen Parameterwert.

6. Verfahren nach Anspruch 5,
**dadurch gekennzeichnet,**
**dass** die Eingabevorrichtung eine Fernbedienung ist.

7. Verfahren nach einem der Ansprüche 1 bis 6,
**dadurch gekennzeichnet,**
**dass** der Sensor ein optischer Sensor ist, insbesondere ein Laserscanner, eine 3D-Kamera, eine Stereokamera oder eine Monokular-Kamera.

## Claims

1. Method for controlling an industrial truck (1), in particular a picking industrial truck (1), wherein the industrial truck (1) has, for monitoring the surroundings, a sensor which is connected to a control device, and after a starting command the control device automatically moves the industrial truck (1) without a signal from a driving signal generator which is actuated by a person, detects a monitoring area by evaluating the data of the sensor, determines at least one guideline (7) in the data from landmarks and/or markings arranged in the line, and moves the industrial truck (1) along the guide (7) at a lateral distance therefrom,
**characterized**
**in that** the distance present between the industrial truck (1) and the guideline (7) is selected as a setpoint value for the lateral distance by the control device by means of a command input.

2. Method according to Claim 1,
**characterized**
**in that** the command input takes place simultaneously by means of the starting command.

3. Method according to Claim 1 or 2,
**characterized**
**in that** the landmarks which are arranged on the line are goods and/or parts of a shelf, and the guideline (7) is composed of a shelf edge (5).

4. Method according to Claim 1 or 2,
**characterized**
**in that** the markings are composed of reflection elements.

5. Method according to one of Claims 1 to 4,
**characterized**
**in that** the setpoint distance can be changed by means of an input device, in particular incrementally by a predefined parameter value.

6. Method according to Claim 5,
**characterized**
**in that** the input device is a remote control system.

7. Method according to one of Claims 1 to 6,
**characterized**
**in that** the sensor is an optical sensor, in particular a laser scanner, a 3D camera, a stereo camera or a monocular camera.

## Revendications

1. Procédé de commande d'un chariot de manutention (1), notamment d'un chariot de manutention (1) servant à la préparation de commandes, le chariot de manutention (1) possédant un capteur servant à la surveillance de l'environnement, lequel est relié à un dispositif de commande et le dispositif de commande conduisant le chariot de manutention (1) automatiquement après une instruction de départ, sans signal d'un générateur de signal de conduite actionné par une personne, couvrant une zone de surveillance en interprétant les données du capteur, déterminant dans les données au moins une ligne de guidage (7) à partir de points de repères et/ou de marquages disposés en ligne et conduisant le chariot de manutention (1) le long de la ligne de guidage (7) avec un écart latéral par rapport à celle-ci,
**caractérisé en ce**
**que** l'écart existant du chariot de manutention (1) par rapport à la ligne de guidage (7) est sélectionné par le dispositif de commande par une saisie d'instruction en tant que valeur de consigne pour l'écart latéral.

2. Procédé selon la revendication 1,
**caractérisé en ce**
**que** la saisie d'instruction est effectuée simultanément par l'instruction de départ.

3. Procédé selon la revendication 1 ou 2,
**caractérisé en ce**
**que** les points de repère disposés en ligne sont des marchandises et/ou des parties d'un rayonnage et la ligne de guidage (7) est constituée d'un bord de rayonnage (5).

4. Procédé selon la revendication 1 ou 2,
**caractérisé en ce**
**que** les marquages sont constitués d'éléments réfléchissants.

5. Procédé selon l'une des revendications 1 à 4,
**caractérisé en ce**
**que** l'écart de consigne peut être modifié par un dispositif de saisie, notamment graduellement d'une valeur de paramètre prédéfinie.

6. Procédé selon la revendication 5,
**caractérisé en ce**
**que** le dispositif de saisie est une télécommande.

7. Procédé selon l'une des revendications 1 à 6,
**caractérisé en ce**
**que** le capteur est un capteur optique, notamment un système de balayage à laser, une caméra 3D, une caméra stéréoscopique ou une caméra monoculaire.
